(19) **Europäisches Patentamt / European Patent Office / Office européen des brevets**

(11) **EP 3 725 926 B1**

(12) **EUROPEAN PATENT SPECIFICATION**

(45) Date of publication and mention
of the grant of the patent:
**22.03.2023 Bulletin 2023/12**

(21) Application number: **19757051.8**

(22) Date of filing: **19.02.2019**

(51) International Patent Classification (IPC):
**D04B 1/16** (2006.01)     **B32B 5/26** (2006.01)
**D04H 1/545** (2012.01)     **D04H 1/549** (2012.01)
**D06M 17/00** (2006.01)     **B32B 5/02** (2006.01)
**B32B 7/12** (2006.01)

(52) Cooperative Patent Classification (CPC):
**B32B 5/026; B32B 5/022; B32B 5/26; B32B 7/12;
D04B 1/16; D04H 1/545; D04H 1/549; D06M 17/00;**
B32B 2262/0223; B32B 2307/724; B32B 2437/00

(86) International application number:
**PCT/JP2019/006151**

(87) International publication number:
**WO 2019/163789 (29.08.2019 Gazette 2019/35)**

(54) **FABRIC FOR FUSION BONDING AND MULTILAYER BODY COMPRISING SAID FABRIC FOR FUSION BONDING**

GEWEBE ZUM SCHMELZVERBINDEN UND MEHRSCHICHTIGER KÖRPER MIT DIESEM GEWEBE ZUM SCHMELZVERBINDEN

TISSU POUR LIAISON PAR FUSION, ET STRATIFIÉ CONTENANT CE TISSU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2018 JP 2018032030**

(43) Date of publication of application:
**21.10.2020 Bulletin 2020/43**

(73) Proprietor: **Kuraray Co., Ltd.**
**Kurashiki-shi, Okayama 710-0801 (JP)**

(72) Inventors:
• **ONOGI, Shoji**
**Kurashiki-shi, Okayama 713-8550 (JP)**
• **NAKATSUKA, Hitoshi**
**Kurashiki-shi, Okayama 713-8550 (JP)**

• **IKEDA, Takayuki**
**Kurashiki-shi, Okayama 713-8550 (JP)**
• **KAWAKADO, Shinya**
**Saijo-shi, Ehime 793-8585 (JP)**

(74) Representative: **Müller-Boré & Partner
Patentanwälte PartG mbB
Friedenheimer Brücke 21
80639 München (DE)**

(56) References cited:
**EP-A1- 1 043 438       WO-A1-99/39037
JP-A- 2001 219 493      JP-A- 2004 149 973
JP-A- 2007 308 842      JP-A- 2013 040 290
JP-B1- S 351 445        JP-U- 3 174 733
US-A1- 2017 226 691**

**Description**

TECHNICAL FIELD

The present invention relates to a fusing fabric which is particularly applicable to clothing and body supporting members requiring thermal fusion of plies of fabric, such as underwear, outerwear, and brassieres, and to a laminate including the fusing fabric, and having an anti-fray effect, high breathability, and air permeability maintained before and after a thermal fusion process.

BACKGROUND ART

In the fields of clothing and body supporting members, in particular, brassieres and corsets, a plurality of plies of fabric are stacked, and then molded into one piece through thermal fusion for the purposes of reducing fraying, and supporting or shaping the body. In general, to reduce the fraying, a fusing material is required to have a high fusion property, and therefore, the fusing material must be heated to a temperature near its melting point to perform thermal fusion. However, the existing fusing materials cannot achieve the thermal fusion at low temperatures, and there are concerns about texture and air permeability of the resulting products.

Therefore, in recent years, a plurality of plies of fabric can be molded into a product through fusion with a thermoplastic film which can be thermally fusible at low temperatures sandwiched therebetween, so that the resulting product can maintain its texture even after the thermal fusion (see Patent Document 1). Further, in order to provide a fusion film with improved air permeability, the fusion film has been made porous to improve breathability of the product (see Patent Document 2).

Despite the development of such a fusion film with improved air permeability, there are still great concerns about the air permeability. This is because the clothing and the body supporting members are often worn in close contact with the body, which makes the concern about the air permeability more sensitive. Specifically, as for products that require thermoforming, there is a limit on the improvement in air permeability by the fusion film.

There is also a method using no film. In this method, fusible fibers are incorporated as one of components of fabric, and the thermally fusible fibers are fused at their surfaces in contact with each other, so that the fraying can be reduced (see Patent document 3). According to this method, clothing that can accomplish the purposes can be obtained without greatly changing not only the texture of the fabric, but also characteristics of the fused fabric, such as a basis weight. EP 1 043 438 A1 describes a stretchable adhesive nonwoven fabric having an excellent adhesive strength as well as air permeability and flexibility.

However, in the above method, how the fusible fibers are incorporated into the fabric forming the product needs to be designed, which lowers the degree of freedom in use, and is not suitable for developing various kinds of products.

CITATION LIST

PATENT DOCUMENTS

Patent Document 1: Japanese Unexamined Patent Publication No. 2006-181782
Patent Document 2: Japanese Unexamined Patent Publication No. 2008-188202
Patent Document 3: Japanese Unexamined Patent Publication No. 2009-209480

SUMMARY OF THE INVENTION

TECHNICAL PROBLEM

In view of the foregoing, an object of the present invention is to easily provide clothing and body supporting members that exhibit an anti-fray effect, high breathability, and good texture even after a thermal fusion process only by means of incorporating fabric made of fibers which is thermally fusible at low temperatures between plies of fabric to be thermally fused together in the fields of clothing and body supporting members which require thermal fusion of plies of fabric, such as underwear, outerwear, and brassieres.

SOLUTION TO THE PROBLEM

As a result of studies to solve the problems described above, the inventors of the present invention have found that clothing and a body supporting member having an anti-fray effect and high breathability even after a thermal fusion process can be easily obtained through mere incorporation of a fusing fabric used for thermal fusion of a plurality of plies of fabric between the plies, the fusing fabric containing at least partially fusible fibers made of a resin having a melting point of 150°C or lower, and having an air permeability of 1000 $cm^3/cm^2 \cdot s$ or more and 10000 $cm^3/cm^2 \cdot s$ or less. The fusible fibers are modified ethylene vinyl alcohol copolymer fibers or modified polyamide fibers.

The fusing fabric may have a basis weight of 15 $g/m^2$ or more to 80 $g/m^2$ or less.

The present invention may also provide a laminate at least partially containing the fusing fabric, and a plurality of plies of fabric to be thermally fused.

The laminate may have a peel strength of 10 N/cm or more, and an air permeability of 5 $cm^3/cm^2 \cdot s$ or more.

The laminate at least partially containing the fusing fabric and a plurality of plies of fabric to be thermally fused may be produced by a method of heating the fusing fabric and the plies of fabric at a temperature of 150°C or lower to be fused.

ADVANTAGES OF THE INVENTION

In the present invention, a thermally fusing material is in the shape of fabric. Thus, even after a dry heat treatment or a hydrothermal treatment such as dyeing, the resulting product can be provided with high air permeability without greatly changing not only the texture of the fabric, but also characteristics of the fused fabric, such as a basis weight. Moreover, there is no need to design how to incorporate the fusible fibers into each ply of fabric forming the product. This can provide a high degree of freedom in use, and the product can be easily obtained.

DETAILED DESCRIPTION

An embodiment of the present invention will now be described in detail below. In the present invention, fabric means a fibrous structure including a woven fabric, a knitted fabric, a braid, or a nonwoven fabric. It is important that fusible fibers forming the fusing fabric according to the present invention are fusible fibers made of a resin having a melting point of 150°C or lower. The fusible fibers are made of modified polyamide or modified ethylene vinyl alcohol copolymer (will be hereinafter referred to as "modified EVOH") having a melting point of 150°C or lower and can be fused at low temperatures. The melting point of the resin used for the fusible fibers is preferably 130°C or lower, more preferably 110°C or lower. The lower limit of the melting point of the resin used for the fusible fibers is not particularly limited, but is preferably 40°C or higher from the viewpoint of storage stability. The present invention is also applicable to fusible fibers using a resin whose melting point is generally not determined, and in this case, it is important that the resin used for the fusible fibers has a softening point of 110°C or lower. The lower limit of the softening point of the resin used for the fusible fibers is not particularly limited, but is preferably 30°C or higher from the viewpoint of storage stability. Modified polyamide fibers and modified EVOH fibers are good in adhesion to a nylon fabric, and are suitable because nylon is often used for the underwear and the body supporting members.

The fusible fibers forming the fusing fabric according to the present invention may be composite fibers made of a plurality of resin components, as long as they do not impair the advantages of the present invention. Specifically, the composite fibers may be made of a resin having a fusion property (will be hereinafter referred to as a "fusible resin") as one component, and a resin or resins other than the fusible resin as additional component(s). The composite fibers may have any cross-sectional shape as long as the fusible resin is exposed only slightly. In particular, composite fibers having a sea-island or core-sheath cross section in which the fusible resin is exposed over the entire surface layer are suitable.

In the composite fibers, if a functional resin is used as a component other than the fusible resin, functionality can be given to a product by fusion. If a polyurethane resin, for example, is used as the functional resin, a product with good stretchability can be obtained. Further, if a resin containing inorganic particles is used, a product exhibiting characteristics of the inorganic particles can be obtained. For example, if antibacterial particles such as zinc oxide or copper particles are added, a laminate obtained after the fusion can be provided with antibacterial properties.

The fusing fabric according to the present invention may contain other fibers besides the fusible fibers, as long as the advantages of the present invention are not impaired. For example, the fusing fabric may be a woven fabric using commonly used thermoplastic fibers as warp yarns and the fusible fibers as weft yarns.

It is important for the fusing fabric according to the present invention to have an air permeability of 1000 $cm^3/cm^2 \cdot s$ or more to 10000 $cm^3/cm^2 \cdot s$ or less. More preferably, the air permeability is 1500 $cm^3/cm^2 \cdot s$ or more to 8000 $cm^3/cm^2 \cdot s$ or less. The inventors of the present invention have found that if the fusing fabric has the air permeability in the above range, a laminate having sufficient breathability and peel strength even after molding is obtained. If the air permeability of the fusing fabric is less than 1000 $cm^3/cm^2 \cdot s$, the molded laminate cannot be provided with sufficient breathability, and if the air permeability exceeds 10000 $cm^3/cm^2 \cdot s$, the molded laminate cannot be provided with sufficient peel strength.

The fusing fabric according to the present invention preferably has a basis weight of 15 g/m² or more to 80 g/m² or less. The basis weight is more preferably 20 g/m² or more to 70 g/m² or less. If the basis weight of the fusing fabric is less than the lower limit, the molded laminate may be insufficient in peel strength, and if the basis weight exceeds the upper limit, the molded laminate may be insufficient in breathability.

Although not limited, the fusible fibers used for the fusing fabric according to the present invention preferably have a single yarn fineness of 0.2 dtex or more to 20 dtex or less. The single yarn fineness is more preferably 2.0 dtex or more to 12 dtex or less. If the single yarn fineness exceeds 20 dtex, the fusible fibers do not spread smoothly to fabric to be fused when molten at 110°C, which is a typical steam set temperature, and the molded laminate may be insufficient in breathability. If the single yarn fineness is less than 0.2 dtex, the molded laminate may be insufficient in peel strength because the contact area per single yarn is small, and the yarns may be torn by tension applied during a process using a knitting machine, a loom, or the like.

In addition, the fusing fabric according to the present invention preferably has a thickness of 0.1 mm or more to 1.5 mm or less. If the thickness is less than the lower limit, the molded laminate may be insufficient in peel strength, and the total amount of fusion yarns to be used may decrease, causing fusion spots to be formed easily in the laminate. If the thickness exceeds the upper limit, the fusible fibers are fused together and fill the meshes when heated, which may make the breathability of the molded laminate insufficient. The thickness of the fusing fabric is more preferably 0.3 mm or more to 1.0 mm or less.

A laminate which is suitably used for clothing and body supporting members having an anti-fray effect and high breathability even after a thermal fusion process can be easily obtained if the laminate partially contains the fusing fabric, and a plurality of plies of fabric to be fused. Here, the thermal fusion may be performed in any way without particular limitations, and may be direct heating such as pressing, or indirect heating using a heater. The thermal fusion may also be heating under wet conditions, such as in hot water. Heating is preferably carried out at a temperature not higher than a temperature at which the texture of the fabric is not impaired.

Alternatively, the laminate is easily obtained through heating the fusing fabric and the plies of fabric at a temperature of 150°C or lower to be fused. The temperature is more preferably 130°C or lower, and still more preferably 110°C or lower, which is a steam set temperature in a typical fabric processing site. When a dry heat treatment is performed at a temperature higher than 150°C, fabric such as nylon, which is sensitive to heat, may be deteriorated in texture.

The laminate obtained through fusion using the fusing fabric preferably has an air permeability of 5 cm³/cm²·s or more and a peel strength of 10 N/cm or more. More preferably, the air permeability is 10 cm³/cm²·s or more, and the peel strength is 20 N/cm or more. In designing of the laminate, the following two conditions need to be satisfied. Specifically, the laminate needs to provide ensured breathability and comfortability so as not to cause a user to feel stuffy, and to have a peel resistance so that the laminate is not peeled off even after repeated washing. The inventors of the present invention have found that sufficient comfortability and peel resistance are obtained if the air permeability and peel strength of the laminate are within the ranges described above. If the air permeability is less than the above-described value, the laminate may be evaluated to cause a stuffy feeling in a sensory evaluation, and if the peel strength is less than the above-described value, the laminate may partially be peeled off after washing.

[Examples]

The present invention will be described in more detail by way of examples, but the present invention is not limited to the examples.

(Example 1)

(Production of 6 mol% Modified EVOH Fibers)

As a modified EVOH component, a 6 mol% modified EVOH (trade name: EX 861, manufactured by Kuraray Co., Ltd.) containing 44 mol% thermoplastic ethylene and having a degree of saponification of 99.9% was molten at 230°C using an extruder, then guided to a spin pack, and discharged from a nozzle with 12 holes each having a diameter of 0.25 mm at a spinneret temperature of 230°C. Thus, fibers were discharged from the spinning nozzle. Threads discharged from the spinneret were cooled using a 1.0 m-long cooling device which blows the air in a transverse direction. Thereafter, a spinning oil made of an antistatic component containing no water and a smoothing component was applied to the threads. Then, the threads were taken up via a roller at a take-over speed of 2000 m/min to obtain 6 mol% modified EVOH fibers of 78 dtex/12f of the present example.

(Production of Ny-6 Fibers)

As nylon-6 (hereinafter referred to as "Ny-6"), Ny-6 (1015B) manufactured by Ube Industries Co., Ltd. was molten at 270°C using an extruder, then guided to a spin pack, and discharged from a nozzle with 24 holes each having a diameter of 0.25 mm at a spinneret temperature of 270°C. Thus, fibers were discharged from the spinning nozzle. Threads discharged from the spinneret were cooled using a 1.0 m-long cooling device which blows the air in a transverse direction. Thereafter, a water emulsion oil made of an antistatic component and a smoothing component was applied as a spinning oil to the threads. Then, the threads were taken up via a roller at a take-over speed of 4000 m/min to obtain Ny-6 fibers of 78 dtex/12f of the present example.

(Production of Laminate of 6 mol% Modified EVOH Weft Knitted Fabric and Ny-6 Warp Knitted Fabric)

Using the Ny-6 fibers and a warp knitting machine, a Ny-6 warp knitted fabric having a basis weight of 180 g/m$^2$, a single yarn fineness of 6.5 dtex, a thickness of 1.301 mm, and an air permeability of 105 cm$^3$/cm$^2$·s was produced. This was used as a fabric to be fused with a fusing fabric. Using the 6 mol% modified EVOH fibers and a tube knitting machine, a 6 mol% modified EVOH weft knitted fabric having a basis weight of 19 g/m$^2$, a single yarn fineness of 6.5 dtex, a thickness of 0.291 mm, and an air permeability of 8283 cm$^3$/cm$^2$·s was prepared. This was used as the fusing fabric (fusion material). Then, a piece of the 6 mol% modified EVOH weft knitted fabric serving as the fusion material was sandwiched between two plies of the Ny-6 warp knitted fabric, which was then heated and pressurized with a steam iron at 110°C for 30 seconds to produce a laminate of the 6 mol% modified EVOH weft knitted fabric and the Ny-6 warp knitted fabric.

(Measurement of Melting Point)

In accordance with JIS K 7121, measurement was performed using a differential scanning calorimeter (DSC-60) manufactured by Shimadzu Corporation at a temperature increase rate of 10°C/min. Indium and lead were used for the calibration of the temperature. A melting peak temperature (Tpm) in accordance with the JIS standard was obtained from a chart of the second run, which was regarded as the melting point.

(Measurement of Softening Point)

Measurement and calculation were performed using a differential thermal analyzer TAS200 manufactured by Rigaku Co., Ltd. in a nitrogen atmosphere at a temperature increase rate of 10°C/min.

(Measurement of Basis Weight)

The basis weight (g/m$^2$) of each of the produced weft knitted fabric, warp knitted fabric, nonwoven fabric, and laminate was measured in accordance with JIS L 1096.

(Measurement of Air Permeability)

An air-flow resistance value R (kPa·s/m) of each of the produced weft knitted fabric, warp knitted fabric, nonwoven fabric, and laminate was measured using a KES-F8-AP1 air permeability tester manufactured by Katotec Co., Ltd., and a value V (cm$^3$/cm$^2$·s) was calculated from the following mathematical equation (1), which was regarded as the air permeability.
[Math. 1]

$$V = 124.55 / (R \times 10) \ (1)$$

(Air Permeability Retention Rate)

Using values of the air permeability of the laminate measured before and after the fusion, a value P was calculated from the following mathematical equation (2), which was regarded as the air permeability retention rate.
[Math. 2]

$$P = (\text{air permeability of laminate after fusion } (\text{cm}^3/\text{cm}^2 \cdot \text{s}) \,/\, \text{air permeability } (\text{cm}^3/\text{cm}^2 \cdot \text{s}) \text{ of}$$

$$\text{laminate before fusion}) \times 100 \quad (2)$$

(Evaluation of Breathability)

The breathability of the produced laminate was evaluated through a sensory evaluation. A fused sample of 100 mm length × 100 mm width was produced, and then evaluated by three test users in terms of stuffiness and discomfort. Thereafter, the breathability of the laminate was evaluated as described below.

Good: Good breathability (all three test users perceived no stuffiness and discomfort)
Average: Acceptable breathability (one of three test users perceived stuffiness and discomfort)
Poor: Poor breathability (two of three test users perceived stuffiness and discomfort)

(Measurement of Peel Strength)

To measure the peel strength of the produced laminate, a sample of the laminate, 50 mm length × 10 mm width, was subjected to a 180 degree T-peel test using a universal tester Tensilon RTG-1250 manufactured by A&D Company Limited, with a chuck interval set to 20 mm and a tensile speed to 40 mm/min.

(Evaluation of Fusion Property)

A fusion property of the produced laminate was evaluated based on peel resistance after washing. After washing 50 times, samples were evaluated according to the following criteria. The washing was carried out according to Method 103 of JIS L 0217 for household electric washing machines.

Good: Good fusion property (no peeling at the fused portion)
Average: Acceptable fusion property (an edge of the fused portion peeled, and a peeling area was less than 10% of the fused portion)
Poor: Poor fusion property (the fused portion further peeled from its edge, and a peeling area was equal to or more than 10% of the fused portion)

(Evaluation of Texture)

The texture of the produced laminate was evaluated in the following manner in a sensory evaluation.

Excellent: The fabric had no change in hardness before and after a heat treatment
Good: The fabric was hardened in part of its surface, but had little change in hardness as a whole.
Poor: The fabric became harder and stronger than before the heat treatment Table 1 shows the results.

(Example 2)

A weft knitted fabric (basis weight: 25 g/m$^2$, single yarn fineness: 6.5 dtex, thickness: 0.389 mm, air permeability: 5514 cm$^3$/cm$^2$·s) having a greater basis weight than the 6 mol% modified EVOH weft knitted fabric of Example 1 was produced, which was used as a fusing fabric (a fusion material). In the same manner as in Example 1, a laminate of 6 mol% modified EVOH weft knitted fabric and Ny-6 warp knitted fabric was produced, and its air permeability, air permeability retention rate, peel strength, breathability, fusion property, and texture were evaluated. Table 1 shows the results.

(Example 3)

A weft knitted fabric (basis weight: 41 g/m$^2$, single yarn fineness: 6.5 dtex, thickness: 0.736 mm, air permeability: 2060 cm$^3$/cm$^2$·s) having a greater basis weight than the 6 mol% modified EVOH weft knitted fabric of Example 2 was produced, which was used as a fusing fabric (fusion material). In the same manner as in Example 1, a laminate of 6 mol% modified EVOH weft knitted fabric and Ny-6 warp knitted fabric was produced, and its air permeability, air permeability retention rate, peel strength, breathability, fusion property, and texture were evaluated. Table 1 shows the results.

EP 3 725 926 B1

(Example 4)

A weft knitted fabric (basis weight: 75 g/m², single yarn fineness: 6.5 dtex, thickness: 1.195 mm, air permeability: 1205 cm³/cm²·s) having a greater basis weight than the 6 mol% modified EVOH weft knitted fabric of Example 3 was produced, which was used as a fusing fabric (fusion material). In the same manner as in Example 1, a laminate of 6 mol% modified EVOH weft knitted fabric and Ny-6 warp knitted fabric was produced, and its air permeability, air permeability retention rate, peel strength, breathability, fusion property, and texture were evaluated. Table 1 shows the results.

(Example 5)

(Production of Modified Ny Weft Knitted Fabric)

Using FLOR-IVI (110T12f) manufactured by Unitika Co., Ltd., which is modified nylon (hereinafter referred to as "modified Ny") fibers as modified polyamide fibers, and a tube knitting machine, a weft knitted fabric (basis weight: 17 g/m², single yarn fineness: 9.2 dtex, thickness: 0.288 mm, air permeability: 9569 cm³/cm²·s) was produced, which was used as a fusing fabric (fusion material). In the same manner as in Example 1, a laminate of modified Ny weft knitted fabric and Ny-6 warp knitted fabric was produced, which was then heated and pressurized with a steam iron at 110°C for 30 seconds, and its air permeability, air permeability retention rate, peel strength, breathability, fusion property, and texture were evaluated. Table 1 shows the results.

(Example 6)

A weft knitted fabric (basis weight: 22 g/m², single yarn fineness: 9.2 dtex, thickness: 0.466 mm, air permeability: 6667 cm³/cm²·s) having a greater basis weight than the modified Ny weft knitted fabric of Example 5 was produced, which was used as a fusing fabric (fusion material). In the same manner as in Example 5, a laminate of modified Ny weft knitted fabric and Ny-6 warp knitted fabric was produced, and its air permeability, air permeability retention rate, peel strength, breathability, fusion property, and texture were evaluated. Table 1 shows the results.

(Example 7)

A weft knitted fabric (basis weight: 40 g/m², single yarn fineness: 9.2 dtex, thickness: 0.742 mm, air permeability: 2490 cm³/cm²·s) having a greater basis weight than the modified Ny weft knitted fabric of Example 6 was produced, which was used as a fusing fabric (fusion material). In the same manner as in Example 5, a laminate of modified Ny weft knitted fabric and Ny-6 warp knitted fabric was produced, and its air permeability, air permeability retention rate, peel strength, breathability, fusion property, and texture were evaluated. Table 1 shows the results.

(Example 8)

A weft knitted fabric (basis weight: 72 g/m², single yarn fineness: 9.2 dtex, thickness: 1.004 mm, air permeability: 1313 cm³/cm²·s) having a greater basis weight than the modified Ny weft knitted fabric of Example 7 was produced, which was used as a fusing fabric (fusion material). In the same manner as in Example 5, a laminate of modified Ny weft knitted fabric and Ny-6 warp knitted fabric was produced, and its air permeability, air permeability retention rate, peel strength, breathability, fusion property, and texture were evaluated. Table 1 shows the results.

(Example 9)

The 6 mol% modified EVOH fibers of Example 1 were cut short (fiber length: 76 mm), and entangled by needle punching to produce a nonwoven fabric (basis weight: 52 g/m², single yarn fineness: 6.5 dtex, thickness: 0.501 mm, air permeability: 2911 cm³/cm²·s), which was used as a fusing fabric (fusion material). Then, in the same manner as in Example 1, a laminate of 6 mol% modified EVOH nonwoven fabric and Ny-6 warp knitted fabric was produced, and its air permeability, air permeability retention rate, peel strength, breathability, fusion property, and texture were evaluated. Table 1 shows the results.

(Example 10)

The modified Ny fibers of Example 5 were cut short (fiber length: 76 mm), and entangled by needle punching to produce a nonwoven fabric (basis weight: 46 g/m², single yarn fineness: 9.2 dtex, thickness: 0.399 mm, air permeability: 3176 cm³/cm²·s), which was used as a fusing fabric (fusion material). Then, in the same manner as in Example 5, a

7

laminate of modified Ny nonwoven fabric and Ny-6 warp knitted fabric was produced, and its air permeability, air permeability retention rate, peel strength, breathability, fusion property, and texture were evaluated. Table 1 shows the results.

(Example 11)

(Production of 4 mol% Modified EVOH Fibers)

Chips of 6 mol% modified EVOH (EX 861, manufactured by Kuraray Co., Ltd.) containing 44 mol% thermoplastic ethylene and having a degree of saponification of 99.9% were blended with chips of unmodified EVOH (E-112YS, manufactured by Kuraray Co., Ltd.) in a weight ratio of 2:1. Then, the obtained blend was molten at 230°C using an extruder, thereafter guided to a spin pack, and discharged from a nozzle with 12 holes each having a diameter of 0.25 mm at a spinneret temperature of 230°C. Thus, fibers were discharged from the spinning nozzle. Threads discharged from the spinneret were cooled using a 1.0 m-long cooling device which blows the air in a transverse direction. Thereafter, a spinning oil made of an antistatic component containing no water and a smoothing component was applied to the threads. Then, the threads were taken up via a roller at a take-over speed of 2000 m/min to obtain 4 mol% modified EVOH fibers of 78 dtex/12f of the present example. In the same manner as in Example 1, a 4 mol% modified EVOH weft knitted fabric and a Ny-6 warp knitted fabric were stacked, which was then heated and pressurized with a steam iron at 150°C for 30 seconds to produce a laminate, and its air permeability, air permeability retention rate, peel strength, breathability, fusion property, and texture were evaluated. Table 1 shows the results.

(Example 12) - not covered by the claimed invention

(Production of Polyurethane Fibers)

A thermoplastic polyurethane elastomer (hereinafter referred to as "TPU") (E580, manufactured by Nippon Miractran Co,Ltd.) was molten at 230°C using an extruder, then guided to a spin pack, and discharged from a nozzle with 12 holes each having a diameter of 0.5 mm at a spinneret temperature of 230°C. Thus, fibers were discharged from the spinning nozzle. Threads discharged from the spinneret were cooled using a 1.0 m-long cooling device which blows the air in a transverse direction. Thereafter, a silicone-based oil was applied as a spinning oil to the threads. Then, the threads were taken up via a roller at a take-over speed of 100 m/min to obtain TPU fibers of 78 dtex/12f of the present example. In the same manner as in Example 1, a TPU weft knitted fabric and a Ny-6 warp knitted fabric were stacked, which was then heated and pressurized with a steam iron at 150°C for 30 seconds to produce a laminate, and its air permeability, air permeability retention rate, peel strength, breathability, fusion property, and texture were evaluated. Table 1 shows the results.

(Comparative Example 1)

A weft knitted fabric (basis weight: 11 g/m$^2$, single yarn fineness: 6.5 dtex, thickness: 0.191 mm, air permeability: 16492 cm$^3$/cm$^2$·s) having a smaller basis weight than the 6 mol% modified EVOH weft knitted fabric of Example 1 was produced, which was used as a fusing fabric (fusion material). In the same manner as in Example 1, a laminate of 6 mol% modified EVOH weft knitted fabric and Ny-6 warp knitted fabric was produced, and its air permeability, air permeability retention rate, peel strength, breathability, fusion property, and texture were evaluated. Table 1 shows the results.

(Comparative Example 2)

A weft knitted fabric (basis weight: 106 g/m$^2$, single yarn fineness: 6.5 dtex, thickness: 1.508 mm, air permeability: 405 cm$^3$/cm$^2$·s) having a greater basis weight than the 6 mol% modified EVOH weft knitted fabric of Example 4 was produced, which was used as a fusing fabric (fusion material). In the same manner as in Example 1, a laminate of 6 mol% modified EVOH weft knitted fabric and Ny-6 warp knitted fabric was produced, and its air permeability, air permeability retention rate, peel strength, breathability, fusion property, and texture were evaluated. Table 1 shows the results.

(Comparative Example 3)

(Production of Unmodified EVOH Fibers)

As an EVOH resin, EVOH manufactured by Kuraray Co., Ltd. (E-112YS) was molten at 230°C using an extruder, then guided to a spin pack, and discharged from a nozzle with 24 holes each having a diameter of 0.25 mm at a spinneret temperature of 230°C. Thus. fibers were discharged from the spinning nozzle. Threads discharged from the spinneret were cooled using a 1.0 m-long cooling device which blows the air in a transverse direction. Thereafter, a water emulsion oil made of an antistatic component and a smoothing component was applied as a spinning oil to the threads. Then, the threads were taken up via a roller at a take-over speed of 4000 m/min to obtain unmodified EVOH fibers of 78 dtex/12f of the present comparative example.

(Production of Laminate of Unmodified EVOH weft knitted fabric and Ny-6 warp knitted fabric)

Then, a weft knitted fabric (basis weight: 60 g/m$^2$, single yarn fineness: 6.5 dtex, thickness: 0.664 mm, air permeability: 1700 cm$^3$/cm$^2$·s) having a basis weight approximately equal to that of the weft knitted fabric of Example 3 was produced, which was used as a fusing fabric (fusion material). Then, in the same manner as in Example 1, an unmodified EVOH weft knitted fabric and a Ny-6 warp knitted fabric were stacked, which was dry-heated and pressurized at 150°C for 30 seconds to produce a laminate, and its air permeability, air permeability retention rate, peel strength, breathability, fusion property, and texture were evaluated. Table 1 shows the results.

(Comparative Example 4)

The production of the unmodified EVOH fibers, the production of the laminate of unmodified EVOH weft knitted fabric/Ny-6 warp knitted fabric, and the evaluation of the air permeability, the air permeability retention ratio, the peel strength, the breathability, the fusion property, and the texture were performed in the same manner as in Comparative Example 3 except that the temperature for dry heating and pressurizing was changed to 170°C. Table 1 shows the results.

(Comparative Example 5)

A weft knitted fabric (basis weight: 50 g/m$^2$, single yarn fineness: 6.5 dtex, thickness: 0.288 mm, air permeability: 2507 cm$^3$/cm$^2$·s) was produced using the Ny-6 fibers (unmodified Ny) used in Example 1, which was used as a fusing fabric (fusion material). In the same manner as in Example 1, the Ny-6 weft knitted fabric and the Ny-6 warp knitted fabric were stacked, which was dry-heated and pressurized at 150°C for 30 seconds to produce a laminate, and its air permeability, air permeability retention rate, peel strength, breathability, fusion property, and texture were evaluated. Table 1 shows the results.

(Comparative Example 6)

The production of the unmodified Ny fibers, the production of the laminate of unmodified Ny weft knitted fabric/Ny-6 warp knitted fabric, and the evaluation of the air permeability, the air permeability retention ratio, the peel strength, the breathability, the fusion property, and the texture were performed in the same manner as in Comparative Example 5 except that the temperature for dry heating and pressurizing was changed to 230°C. Table 1 shows the results.

(Comparative Example 7)

The 6 mol% modified EVOH used in Example 1 was molten at 230°C using an extruder, and produced into a film having a basis weight of 88 g/m$^2$ and a thickness of 0.08 mm, which was used as a fusion material. Subsequently, the 6 mol% modified EVOH film and the Ny-6 warp knitted fabric were stacked in the same manner as in Example 1, which was then heated and pressurized with a steam iron at 110°C for 30 seconds to produce a laminate, and its air permeability, air permeability retention rate, peel strength, breathability, fusion property, and texture were evaluated. Table 1 shows the results.

(Comparative Example 8)

TPU (E585, manufactured by Nippon Miractran Co,Ltd.) was molten at 230°C using an extruder, then guided to a spin pack, and discharged from a nozzle with 12 holes each having a diameter of 0.5 mm at a spinneret temperature of 230°C. Thus, fibers were discharged from the spinning nozzle. Threads discharged from the spinneret were cooled using a 1.0 m-long cooling device which blows the air in a transverse direction. Thereafter, a silicone-based oil was applied as a spinning oil to the threads. Then, the threads were taken up via a roller at a take-over speed of 100 m/min to obtain TPU fibers of 78 dtex/12f of the present comparative example. In the same manner as in Example 1, a TPU weft knitted fabric and a Ny-6 warp knitted fabric were stacked, which was then heated and pressurized with a steam iron at 150°C for 30 seconds to produce a laminate, and its air permeability, air permeability retention rate, peel strength, breathability, fusion property, and texture were evaluated. Table 1 shows the results.

[Table 1]

| | Fusion bonding Material | Melting point of fusion material [°C] | Softening point of fusion material [°C] | Treatment temp. [°C] | Form of fusion material | Basis weight of fusing fabric [g/m²] | Air permeability of fusing fabric [cm³/cm²·s] | Air permeability of laminate [cm³/cm²·s] | | Air permeability retention rate of laminate [%] | Breathability | Peel strength [N/cm] | Fusion bonding property | Texture |
|---|---|---|---|---|---|---|---|---|---|---|---|---|---|---|
| | | | | | | | | Before fusion | After fusion | | | | | |
| Ex. 1 | 6 mol% modified EVOH | 104 | - | 110 | Warp knitted fabric | 19 | 8283 | 64 | 50 | 78 | Good | 17 | Average | Excellent |
| Ex. 2 | 6 mol% modified EVOH | 104 | - | 110 | Warp knitted fabric | 25 | 5514 | 65 | 41 | 63 | Good | 20 | Good | Excellent |
| Ex. 3 | 6 mol% modified EVOH | 104 | - | 110 | Warp knitted fabric | 41 | 2060 | 61 | 13 | 21 | Good | 22 | Good | Excellent |
| Ex. 4 | 6 mol% modified EVOH | 104 | - | 110 | Warp knitted fabric | 75 | 1205 | 58 | 5 | 8.6 | Average | 25 | Good | Excellent |
| Ex. 5 | Modified Ny | 99 | - | 110 | Warp knitted fabric | 17 | 9569 | 68 | 52 | 76 | Good | 16 | Average | Excellent |
| Ex. 6 | Modified Ny | 99 | - | 110 | Warp knitted fabric | 22 | 6667 | 63 | 45 | 71 | Good | 20 | Good | Excellent |
| Ex. 7 | Modified Ny | 99 | - | 110 | Warp knitted fabric | 40 | 2490 | 62 | 23 | 37 | Good | 22 | Good | Excellent |
| Ex. 8 | Modified Ny | 99 | - | 110 | Warp knitted fabric | 72 | 1313 | 55 | 6 | 11 | Average | 27 | Good | Excellent |
| Ex. 9 | 6 mol% modified EVOH | 104 | - | 110 | Nonwoven fabric | 52 | 2911 | 68 | 29 | 43 | Good | 21 | Good | Excellent |
| Ex. 10 | modified Ny | 99 | - | 110 | Nonwoven fabric | 46 | 3176 | 65 | 36 | 55 | Good | 22 | Good | Excellent |
| Ex. 11 | 4 mol% modified EVOH | 146 | - | 150 | Warp knitted fabric | 40 | 3010 | 63 | 37 | 59 | Good | 18 | Average | Good |
| Ex. 12 | TPU | - | 103 | 150 | Warp knitted fabric | 54 | 2665 | 67 | 40 | 60 | Good | 13 | Average | Excellent |
| Com. Ex. 1 | 6 mol% modified EVOH | 104 | - | 110 | Warp knitted fabric | 11 | 16492 | 63 | 60 | 95 | Good | 8 | Poor | Good |
| Com. Ex. 2 | 6 mol% modified EVOH | 104 | - | 110 | Warp knitted fabric | 106 | 405 | 54 | 0.4 | 0.7 | Poor | 30 | Good | Good |
| Com. Ex. 3 | Unmodified EVOH | 160 | - | 150 | Warp knitted fabric | 60 | 1700 | 59 | 55 | 93 | Good | 4 | Poor | Excellent |
| Com. Ex. 4 | Unmodified EVOH | 160 | - | 170 | Warp knitted fabric | 60 | 1700 | 59 | 45 | 76 | Good | 18 | Average | Poor |
| Com. Ex. 5 | Unmodified Ny | 225 | - | 150 | Warp knitted fabric | 50 | 2507 | 63 | 63 | 100 | Good | 0 | Poor | Excellent |
| Com. Ex. 6 | Unmodified Ny | 225 | - | 230 | Warp knitted fabric | 50 | 2507 | 63 | 42 | 67 | Good | 25 | Good | Poor |
| Com. Ex. 7 | 6 mol% modified EVOH | 104 | - | 110 | Film | 88 | 0 | 0 | 0 | - | Poor | 32 | Good | Good |
| Com. Ex. 8 | TPU | - | 119 | 150 | Warp knitted fabric | 57 | 2456 | 64 | 54 | 84 | Good | 7 | Poor | Excellent |

As shown in Table 1, regarding the 6 mol% modified EVOH weft knitted fabrics of Examples 1 to 4 and the modified Ny weft knitted fabrics of Examples 5 to 8, in which the fusion material had a melting point of 150°C or lower and an air permeability of 1000 cm³/cm²·s or more to 10000 cm³/cm²·s or less, the laminates each of which contains partially the fusing weft knitted fabric showed a peel strength of 10 N/cm or more, and an air permeability of 5 cm³/cm²·s or more. This indicates that the laminates had sufficient fusion property and breathability, and maintained the texture. Also, each of the 6 mol% modified EVOH nonwoven fabric of Example 9 and the modified Ny nonwoven fabric of Example 10 showed almost the same fusion property and breathability and maintained the texture when stacked with the Ny warp knitted fabric to produce the laminate. This indicates that the present invention is applicable to not only the weft knitted fabrics, but also the nonwoven fabrics. The 4 mol% modified EVOH weft knitted fabric of Example 11 had a higher melting point than the 6 mol% modified EVOH of Examples 1 to 4, and therefore, required a higher fusion temperature than the samples of Examples 1 to 10. However, the 4 mol% modified EVOH weft knitted fabric was revealed to have sufficient fusion property and breathability, while maintaining the texture. The TPU weft knitted fabric of comparative Example 12 had a softening point of 110°C or lower, and thus, had sufficient fusion property and breathability, and maintained the texture. It has been clarified that the above results are obtained only because the fusing fabric were sufficient in both of air permeability and fusion performance.

On the other hand, the modified EVOH weft knitted fabric of Comparative Example 1 made the fusion property of the resulting laminate poor because its air permeability was higher than 10000 cm³/cm²·s, and the modified EVOH weft knitted fabric of Comparative Example 2 made the air permeability of the laminate poor because its air permeability was less than 1000 cm³/cm²·s. In particular, it was clarified that the fabric of Comparative Example 2 had remarkably low air permeability retention rate as compared to the fabrics of Examples, which deteriorated the breathability to an uncomfortable level when stacked and fused with fabric. It was also found that the unmodified EVOH weft knitted fabric of Comparative Example 3 having a melting point of 160°C, and the Ny-6 (unmodified Ny) weft knitted fabric of Comparative Example 5 having a melting point as high as 225°C were hardly fused through a dry heat treatment at 150°C, resulting in poor fusion property of the laminates. On the other hand, the unmodified EVOH and the unmodified Ny of Comparative Examples 4 and 6 were treated at higher temperature than those of Comparative Examples 3 and 5 in order to improve the fusion property of the laminate. As a result, the Ny knitted fabric to be fused was hardened and its texture was deteriorated. Further, the modified EVOH film of Comparative Example 7 had no breathability, and thus, made the laminate of the film and the Ny warp knitted fabric poorly breathable. It was also found that the TPU of Comparative Example 8 having a softening point higher than 110°C was hardly fused through the dry heat treatment at 150°C, resulting in poor fusion property of the laminate.

**Claims**

1. A fusing fabric used for thermal fusion of a plurality of plies of fabric, the fusing fabric comprising at least partially fusible fibers comprised of a resin that has a melting point of 150°C or lower, measured according to JIS K7121 with the differential scanning calorimeter (DSC-60) made from Shimadzu Corporation at the temperature increase rate of 10 degree-C / min, and wherein indium and lead were used for temperature calibration, and wherein the melting peak temperature (Tpm) referred to in the above JIS was determined from the 2nd run chart, and this TPm was taken as the melting point, and having an air permeability (V) of 1000 $cm^3/cm^2 \cdot s$ or more to 10000 $cm^3/cm^2 \cdot s$ or less, measured using a KES-F8-AP1 air permeability tester manufactured by Katotec Co., and the value of the air permeability being calculated by the formula V = 124.55 / (R × 10), wherein the fusible fibers are modified ethylene vinyl alcohol copolymer fibers or modified polyamide fibers.

2. The fusing fabric of claim 1, having a basis weight of 15 $g/m^2$ or more to 80 $g/m^2$ or less.

3. A laminate which is at least partially comprising the fusing fabric of claim 1 or 2, and a plurality of plies of fabric to be thermally fused.

4. The laminate of claim 3, having a peel strength of 10 N/cm or more, measured using a 50 mm long and 10 mm wide sample which was subjected to a 180 degree T-peel test using a universal tester Tensilon RTG-1250 manufactured by A&D Company Limited, with a chuck interval set to 20 mm and a tensile speed to 40 mm/min, and an air permeability of 5 $cm^3/cm^2 \cdot s$ or more.

5. A method for producing a laminate at least partially comprising the fusing fabric of claim 1 or 2 and a plurality of plies of fabric to be thermally fused, the method comprising heating the fusing fabric and the plurality of plies of fabric at a temperature of 150°C or lower to be fused.

## Patentansprüche

1. Schmelzgewebe, das zum thermischen Verschmelzen einer Mehrzahl von Gewebelagen verwendet wird, wobei das Schmelzgewebe mindestens teilweise schmelzbare Fasern umfasst, die ein Harz umfassen, welches einen Schmelzpunkt, gemessen gemäß JIS K7121 mit dem von Shimadzu Corporation hergestellten Differenzialrasterkalorimeter (DSC-60) bei der Temperaturerhöhungsrate von 10°C/min, und wobei Indium und Blei zur Temperaturkalibration verwendet wurden, und wobei die Schmelzpeaktemperatur (Tpm), auf die in der obigen JIS Bezug genommen wird, aus dem zweiten Laufdiagramm bestimmt wurde, und diese Tpm als der Schmelzpunkt genommen wurde, von 150°C oder niedriger aufweist, und eine Luftdurchlässigkeit (V), gemessen unter Verwendung eines von Katotec Co. hergestellten Luftdurchlässigkeitstesters KES-F8-AP1, und wobei der Wert der Luftdurchlässigkeit durch die Formel V = 124,55 / (R × 10) berechnet wird, von 1000 $cm^3/cm^2 \cdot s$ oder mehr bis 10000 $cm^3/cm^2 \cdot s$ oder weniger aufweist, wobei die schmelzbaren Fasern modifizierte Ethylen-Vinylalkohol-Copolymer-Fasern oder modifizierte Polyamid-Fasern sind.

2. Schmelzgewebe nach Anspruch 1, aufweisend ein Flächengewicht von 15 $g/m^2$ oder mehr bis 80 $g/m^2$ oder weniger.

3. Laminat, welches mindestens teilweise das Schmelzgewebe nach Anspruch 1 oder 2 und eine Mehrzahl von thermisch zu verschmelzenden Gewebelagen umfasst.

4. Laminat nach Anspruch 3, das eine Schälfestigkeit, gemessen unter Verwendung einer 50 mm langen und 10 mm breiten Probe, die einem 180-Grad-T-Schältest unter Verwendung eines von A&D Company Limited hergestellten Universalprüfgeräts Tensilon RTG-1250 unterzogen wurde, wobei ein Spannintervall auf 20 mm und eine Zuggeschwindigkeit auf 40 mm/min eingestellt wurden, von 10 N/cm oder mehr und eine Luftdurchlässigkeit von 5 $cm^3/cm^2 \cdot s$ oder mehr aufweist.

5. Verfahren zur Herstellung eines Laminats, mindestens teilweise umfassend das Schmelzgewebe nach Anspruch 1 oder 2 und eine Mehrzahl von thermisch zu verschmelzenden Gewebelagen, wobei das Verfahren Erwärmen des Schmelzgewebes und der Mehrzahl von Gewebelagen auf eine Temperatur von 150°C oder weniger, um verschmolzen zu werden, umfasst.

## Revendications

1. Tissu à lier par fusion utilisé à des fins de fusion par voie thermique d'une pluralité de plis de tissu, le tissu à lier par fusion comprenant des fibres au moins partiellement fusibles constituées d'une résine présentant un point de fusion de 150°C ou moins, mesuré selon la norme JIS K7121 à l'aide du calorimètre à balayage différentiel (DSC-60) fabriqué par Shimadzu Corporation au taux de montée de la température de 10 degrés C /min, et dans lequel de l'indium et du plomb sont utilisés pour calibrage des températures, et dans lequel la température de pointe de fusion (Tpm) référencée dans la norme JIS ci-dessus a été déterminée sur base du deuxième organigramme d'exploitation et cette TPm a été prise comme le point de fusion,

et présentant une perméabilité à l'air (V) de 1000 cm$^3$/cm$^2$ • s ou plus à 10000 cm$^3$/cm$^2$ • s ou moins, mesurée en utilisant le testeur de perméabilité à l'air KES-F8-AP1 fabriqué par Katotec Co., et la valeur de la perméabilité à l'air étant calculée par la formule V = 124,55 / (R × 10),
dans lequel les fibres fusibles sont des fibres de copolymère d'alcool éthylène-vinylique modifiées ou des fibres de polyamide modifiées.

2. Tissu à lier par fusion selon la revendication 1, ayant un poids de base de 15 g/m$^2$ ou plus à 80 g/m$^2$ ou moins.

3. Stratifié, lequel est au moins partiellement constitué du tissu à lier par fusion selon la revendication 1 ou 2, et d'une pluralité de plis de tissu à fusionner par voie thermique.

4. Stratifié selon la revendication 3, présentant une résistance au pelage de 10 N/cm ou plus, mesurée en utilisant un échantillon de 50 mm de long et de 10 mm de largeur, qu'on a soumis à un test de pelage en T de 180 degrés en utilisant un testeur universel Tensilon RTG-1250 fabriqué par A&D Company Limited, avec un intervalle de mandrin réglé sur 20 mm et une vitesse de traction sur 40 mm/min et une perméabilité à l'air de 5 cm$^3$/cm$^2$ • s ou plus.

5. Procédé de production d'un stratifié constitué au moins partiellement du tissu à lier par fusion selon la revendication 1 ou 2, et d'une pluralité de plis de tissu à fusionner par voie thermique, le procédé comprenant le chauffage du tissu à lier par fusion et de la pluralité de plis du tissu à une température de 150°C ou moins devant fusionner.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1043438 A1
- JP 2006181782 A
- JP 2008188202 A
- JP 2009209480 A